# EUROPÄISCHE PATENTSCHRIFT

(11) **EP 2 269 009 B1**
(45) Veröffentlichungstag und Bekanntmachung des Hinweises auf die Patenterteilung: **28.12.2011**
(21) Anmeldenummer: 09735798.2
(22) Anmeldetag: 24.04.2009
(51) Int. Cl.: G01D 11/24

(54) **MESSUMFORMER ZUR PROZESSINSTRUMENTIERUNG UND VERFAHREN ZUR ÜBERWACHUNG DES ZUSTANDS DESSEN SENSORS**
MEASURING TRANSDUCER FOR PROCESS INSTRUMENTATION, AND METHOD FOR MONITORING THE CONDITION OF THE SENSOR THEREOF
TRANSDUCTEUR DE MESURE POUR L'INSTRUMENTATION DE PROCÉDÉS ET PROCÉDÉ POUR CONTRÔLER L'ÉTAT DU CAPTEUR DE CE TRANSDUCTEUR

(30) Priorität: 25.04.2008 DE 102008020862
(43) Veröffentlichungstag der Anmeldung: 05.01.2011
(73) Patentinhaber: Siemens Aktiengesellschaft, 80333 München (DE)
(72) Erfinder: CHEMISKY, Eric, F-67250 Soultz sous forets (FR); ESSERT, Thomas, 76684 Östringen (DE); MEUNIER, Delphine, F-67630 Scheibenhard (FR); PRAMANIK, Robin, 76135 Karlsruhe (DE); SPATZ, Martin, 76829 Landau (DE)
(74) Vertreter: Wolff, Harry
(86) Internationale Anmeldenummer: PCT/EP2009/054958
(87) Internationale Veröffentlichungsnummer: WO 2009/130303

(56) Entgegenhaltungen:
- WO-A-98/29719
- WO-A-2004/066194
- DE-T2- 69 309 123

## Beschreibung

Die Erfindung betrifft einen Messumformer zur Prozessinstrumentierung mit einem Sensor zur Erfassung einer physikalischen oder chemischen Größe nach dem Oberbegriff des Anspruchs 1 sowie ein Verfahren zur Überwachung des Sensorzustands nach dem Oberbegriff des Anspruchs 5.

In prozesstechnischen Anlagen werden zur Steuerung von Prozessen vielfältige Feldgeräte für die Prozessinstrumentierung eingesetzt. Messumformer dienen zur Erfassung von Prozessvariablen, wie beispielsweise Temperatur, Druck, Durchflussmenge, Füllstand, Dichte oder Gaskonzentration eines Mediums. Durch Stellglieder kann der Prozessablauf in Abhängigkeit von erfassten Prozessvariablen entsprechend einer beispielsweise von einer Leitstation vorgegebenen Strategie beeinflusst werden. Als Beispiele für Stellglieder seien ein Regelventil, eine Heizung oder eine Pumpe genannt.

Aus der DE 693 09 123 T2 ist ein Sensor eines Druckwandlers mit einem laminierten Substrat bekannt. Eine mit elektrischen Elementen versehene, dünne Membran aus Silizium ist oberhalb einer offenen Kammer angebracht. Druckänderungen führen dazu, dass sich die Membran in die Kammer hinein bzw. aus dieser heraus auslenkt. Die Auslenkungen rufen Änderungen eines elektrischen Parameters, üblicherweise einer Kapazität oder eines Widerstandswerts, hervor, die gemessen und in eine dem Druck entsprechende Information umgewandelt werden können. Der Einsatz von Festkörperdrucksensoren in rauer Arbeitsumgebung erfordert häufig ein Gehäuse, welches den Sensor umgibt und diesen vor einer direkten Berührung durch das Medium schützt. Dazu weist das Gehäuse druckfeste Metallteile auf, in welchen sich eine oder mehrere Messkammern befinden, die jeweils durch eine flexible, mediendichte Membran abgedeckt sind, welche die Messkammern von dem Medium trennt und sich bei einem sich ändernden Druck des Mediums verformt. Ein nicht korrosives, inertes Füllfluid, beispielsweise ein Silikonöl, ist in der Messkammer zwischen der Trennmembran und der Sensormembran vorhanden und überträgt den zu messenden Druck auf die Sensormembran. Elektrische Leitungen, welche Signale von dem Sensor zu externen Kontakten leiten, sind durch druckdichte Leitungsdurchführungen aus dem Gehäuse herausgeführt und zur Auswertung der Signale an eine Ansteuer- und Auswerteeinrichtung angeschlossen, die beispielsweise über einen Feldbus einen dem jeweiligen Druck entsprechenden Messwert an eine Leitstation oder eine speicherprogrammierbare Steuerung ausgibt. Über den technischen Aufbau der elektrischen Elemente, die zur Erfassung der durch den Druck hervorgerufenen Auslenkungen der Sensormembran verwendet werden, sind der Patentschrift keine weiteren Angaben entnehmbar.

Allgemein können Sensorelemente, die physikalische Größen, wie Druck, Temperatur oder Gaskonzentrationen, in elektrische Signale umwandeln, auf einem planaren Substrat aufgebracht werden. Dieses Substrat dient dann als mechanische Befestigung des empfindlichen Sensorelements auf einem Träger und zudem als Schutz gegen äußere Einflüsse, beispielsweise zur Verbesserung der elektromagnetischen Verträglichkeit. Insbesondere bei piezoresistiven Drucksensoren besteht eine Möglichkeit zum Aufbringen der elektrischen Elemente auf das Substrat darin, diese Elemente im Substrat einzubetten und das Substrat in der Nähe dieser Elemente zu dotieren, wobei ein elektrischer Kontakt zwischen dem elektrischen Element und dem Substrat besteht. Ein PN-Übergang nach Art einer Diode sorgt bei geeignetem Anlegen einer Spannung für eine elektrische Trennung von Element und Substrat. Die elektrischen Eigenschaften des PN-Übergangs sind dabei von dem Substratmaterial und der Dotierung abhängig. Eine Veränderung des Sensormaterials beispielsweise durch chemische Kontamination kann zu Veränderungen des Messsignals und somit zu einem Fehler des Messwerts führen.

Aus der WO 98/29719 A1 ist ein Sensor zur Messung der Gewichtsbelastung eines Sitzes in einem Kraftfahrzeug bekannt. Zu einem elektrischen Element des Sensors, welches zur Erfassung der Gewichtskraft dient, ist eine Diode mit einem PN-Übergang parallel geschaltet. Zur Überwachung des Sensorzustands wird die Diodenspannung ausgewertet. Zudem wird mit Hilfe der Diode die Umgebungstemperatur bestimmt, damit eine Kompensation der Auswirkungen der Umgebungstemperatur auf die Eigenschaften der zur Gewichtsmessung eingesetzten elektrischen Elemente durchgeführt werden kann.

Der Erfindung liegt die Aufgabe zugrunde, einen Messumformer zur Prozessinstrumentierung zu schaffen, bei welchem der Zustand eines Substrats, das elektrische Elemente zur Erzeugung eines Messsignals trägt, überwacht werden kann.

Zur Lösung dieser Aufgabe weist der neue Messumformer der eingangs genannten Art die im kennzeichnenden Teil des Anspruchs 1 angegebenen Merkmale auf. In den abhängigen Ansprüchen sind vorteilhafte Weiterbildungen der Erfindung und in Anspruch 5 ein Überwachungsverfahren beschrieben.

Die Erfindung hat den Vorteil, dass nun eine Überwachung des Zustands des Sensors beispielsweise auf Veränderungen des Sensormaterials durch chemische Kontamination ermöglicht wird. Bisher waren derartige Veränderungen nicht detektierbar und konnten zu unerkannten Drifterscheinungen des Messwerts, der durch den Messumformer bestimmt und ausgegeben wird, führen. Die Möglichkeit einer Detektion von Veränderungen des Sensors ist von besonderem Vorteil, da in immer mehr Anwendungen von Messumformern eine sehr hohe Zuverlässigkeit bei der Messung physikalischer oder chemischer Größen gefordert wird. Diese Zuverlässigkeit wird durch entsprechende Zertifizierungen, z. B. nach IEC61508, bestätigt, wobei sich aufgrund der neuen Möglichkeit einer Überwachung des Sensorzustands Diagnosemessungen am Sensor nicht mehr lediglich auf die Messung des elektrischen Bruchs in den elektrischen Elementen selbst oder in den elektrischen Anschlussleitungen beschränken müssen. Vielmehr wird es nun ermöglicht, Veränderungen in den Übergängen zwischen den elektrischen Elementen und dem Substrat sowie im Substrat selbst zu detektieren.

Wenn die elektrische Eigenschaft des PN-Übergangs, die zur Überwachung des Zustands des Sensors bestimmt und ausgewertet wird, temperaturabhängig ist, wenn weiterhin ein Temperatursensor zur Erfassung der Substrattemperatur vorgesehen ist und wenn zudem die Mittel zur Überwachung des Sensorzustands dazu ausgebildet sind, anhand der elektrischen Eigenschaft einen ersten Wert der Temperatur zu bestimmen und mit einem zweiten Wert, der mit dem Temperatursensor ermittelt ist, zu vergleichen, wird in vorteilhafter Weise zusätzlich eine Überwachung der Genauigkeit des Temperatursensors ermöglicht. Temperatursensoren werden nämlich häufig neben den eigentlichen, zur Erzeugung des Messsignals vorgesehenen elektrischen Elementen in den Sensor integriert, da gerade bei Sensoren mit Siliziumsubstrat die Temperaturempfindlichkeit nicht vernachlässigt werden kann. Bei derartigen Sensoren ist ein Fehler von 2 %/10 K Temperaturdifferenz üblich und eine Fehlmessung der Temperatur führt unweigerlich zu einer Fehlkompensation des in Abhängigkeit des Messsignals ermittelten Messwerts. Da bisher die Messung der Temperatur lediglich mit Hilfe eines einzigen Temperatursensors erfolgte, musste sich die Diagnose der zur Temperaturmessung verwendeten Schaltung auf die Detektion eines Bruchs des Temperatursensors selbst oder in seinen Zuleitungen beschränken. Langsame Drifterscheinungen konnten dagegen bisher nicht detektiert werden. Da nun aufgrund der Abhängigkeit der elektrischen Eigenschaft des PN-Übergangs von der Temperatur ein Vergleichswert für die mit dem Temperatursensor gemessene Temperatur vorliegt, können die Temperaturmessung auf ihre Richtigkeit kontrolliert und Fehler detektiert werden. Eine Unterscheidung zwischen Fehlern durch Veränderungen des PN-Übergangs oder des Substrats oder Fehlern durch Veränderungen des Temperatursensors ist nicht erforderlich, da bei Auftreten eines der genannten Fehler eine Fehlermeldung durch den Messumformer ausgegeben und ein Prozess, in welchem der Messumformer eingesetzt wird, gegebenenfalls in einen sicheren Zustand gebracht werden kann. Ein derartiges Verhalten wird bereits bei einer Zertifizierung nach IEC61508 als sicher angesehen und der Sensor gilt als zu 100 % diagnostiziert.

Besonders vorteilhaft ist eine Ausgestaltung der Erfindung, bei welcher die elektrische Eigenschaft des PN-Übergangs dessen Flussspannung in Durchlassrichtung ist. Diese ist vor allem von der Temperatur und dem Zustand der verwendeten Materialien abhängig, der sich beispielsweise durch chemische Kontamination schleichend verändern kann. Somit können sich allmählich entwickelnde Fehler gut erkannt werden. Die Flussspannung kann beispielsweise im Rahmen einer Kalibrierung des Sensors über der Temperatur als veränderlichem Parameter gemessen und als Kalibrierkurve in ein EEPROM eines Mikrocontrollers abgespeichert werden. Der PN-Übergang, dessen Temperaturverhalten damit bekannt ist, kann die Funktion eines geeichten Temperatursensors übernehmen und zur Diagnose des eigentlichen Temperatursensors herangezogen werden.

Der Messumformer mit der neuen Einrichtung zur Überwachung des Sensorzustands ist mit besonders geringem Aufwand herstellbar, wenn die Mittel zur Zustandsüberwachung zumindest teilweise in der ohnehin vorhandenen Ansteuer- und Auswerteeinrichtung angeordnet sind.

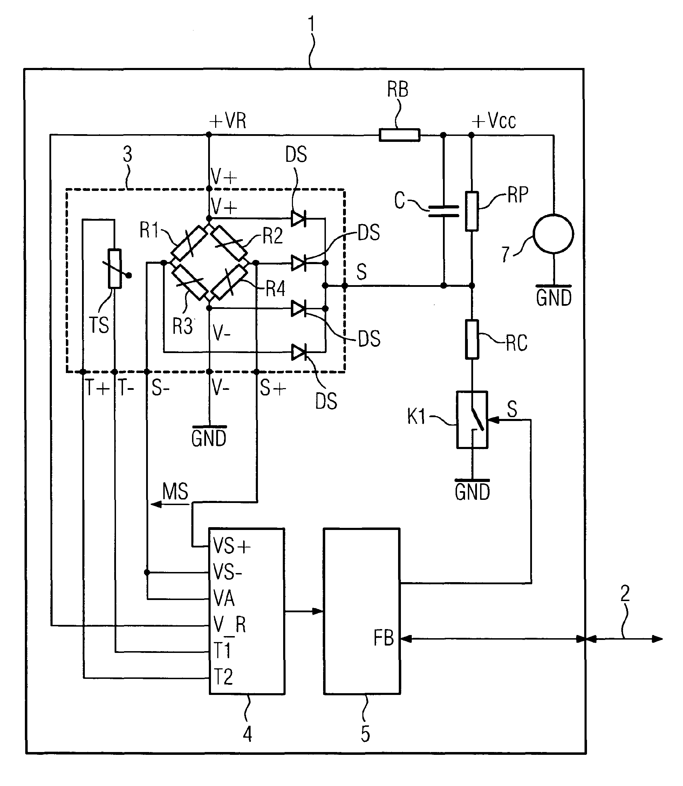

Anhand der Zeichnung, in der ein Ausführungsbeispiel der Erfindung dargestellt ist, werden im Folgenden die Erfindung sowie Ausgestaltungen und Vorteile näher erläutert.

Die einzige Figur zeigt den prinzipiellen elektrischen Aufbau eines Messumformers 1, der zur Prozessinstrumentierung dient und zur Kommunikation mit einer übergeordneten Leitstation in einer prozesstechnischen Anlage an einen Feldbus 2 anschließbar ist. Zum einen kann der Messumformer 1 über den Feldbus 2 mit seinen Betriebsparametern, beispielsweise Adresse am Feldbus 2 oder Darstellungsart des Messwerts, versorgt werden, zum anderen sind über den Feldbus 2 durch den Messumformer 1 Messwerte, Alarm- oder Zustandsmeldungen ausgebbar.

Ein Sensor 3 dient zur Erfassung einer physikalischen oder chemischen Größe, im gezeigten Ausführungsbeispiel zur Erfassung eines Drucks. Die übrigen Komponenten des Messumformers 1 haben die Funktion einer Ansteuer- und Auswerteeinheit, deren Kern ein A/D-Wandler 4 und ein Mikrocontroller 5 bilden. Die Ansteuer- und Auswerteeinheit bestimmt einen Messwert der physikalischen oder chemischen Größe in Abhängigkeit eines Messsignals MS, das an Eingängen VS+ und VSdes A/D-Wandlers 4 anliegt, und gibt diesen über einen Ausgang FB des Mikrocontrollers 5 aus. Der Sensor 3 enthält vier druckabhängige Widerstände R1, R2, R3 und R4, die zu einer Messbrücke verschaltet sind. Das Messsignal MS wird als Spannung zwischen zwei Anschlusspunkten S+ und S- gemessen, wobei die Messung ratiometrisch zu einer Versorgungsspannung zwischen den Anschlusspunkten V+ und V- des Sensors 3 durchgeführt wird.

Die Widerstände R1 ... R4 stellen elektrische Elemente dar, die in ein Substrat des Sensors 3 eingebettet sind. Zur elektrischen Isolierung dieser Elemente gegenüber dem Substrat ist dieses in der Nähe der Elemente dotiert, so dass zwischen den Widerständen R1 ... R4 eine Diode entsteht, die in der Figur jeweils mit DS bezeichnet ist und die im Normalbetrieb während den Messungen gesperrt ist. Die Dioden DS sind somit durch einen PN-Übergang zwischen den elektrischen Elementen, d. h. den Widerständen R1 ... R4, und dem Substrat des Sensors 3 realisiert.

Zur Messung der Temperatur des Sensors 3 befindet sich zudem auf dem Substrat ein Temperaturmesswiderstand TS, dessen Anschlussleitungen auf zwei Anschlusspunkte T+ und T- des Sensors 3 geführt sind und der mit Eingängen T1 und T2 des A/D-Wandlers 4 verbunden ist.

Eine Spannungsquelle 7, die mit Masse GND verbunden ist, erzeugt eine Versorgungsspannung +Vcc, die über einen Widerstand RB geführt ist, der eine Überwachung des Sensors 3 auf Bruch erlaubt. Auf diese Weise wird eine Referenzspannung +VR gewonnen, die zur Versorgung des Sensors 3 an den Anschlusspunkt V+ sowie zur Ermöglichung einer reinen ratiometrischen Messung an einen Eingang V R für eine Referenzspannung des A/D-Wandlers 4 angeschlossen ist.

Der A/D-Wandler 4 misst im Normalbetrieb das differentielle Messsignal MS, das an Eingängen VS+ und VS- des A/D-Wandlers 4 anliegt. Zusätzlich ist der A/D-Wandler 4 in der Lage, an einem Eingang VA, der mit dem Anschlusspunkt S- des Sensors 3 verbunden ist, das absolute Potential gegenüber Masse zu messen. Der Eingang VA wird zudem zur Bestimmung der Durchlassspannung der PN-Übergänge, welche in der Figur durch Dioden DS symbolisiert sind, genutzt. Zur Messung der Flussspannung in Durchlassrichtung der Dioden DS als eine elektrische Eigenschaft der PN-Übergänge muss durch die Dioden DS ein Strom fließen. Dazu wird im Testbetrieb ein Anschlusspunkt S am Substrat des Sensors 3 über einen Widerstand RC und einen Schalter K1 durch Schließen des Schalters K1 auf Masse GND geschaltet. Der Widerstand RC ist wesentlich kleiner als ein Widerstand RP, der zwischen dem Anschlusspunkt S und der Versorgungsspannung +Vcc angeordnet ist. Der Widerstand RP wird auch als Polarisationswiderstand bezeichnet und hat etwa den zehnfachen Wert des Widerstands RC. Parallel zum Widerstand RP ist ein Kondensator C angeordnet, der dafür sorgt, dass die Impedanz des Substratanschlusspunktes S zur Masse GND für Wechselspannungen so gering ist, dass das Substrat des Sensors 3 auch als Abschirmung zur Verbesserung der elektromagnetischen Verträglichkeit dienen kann. Bei für einen Testbetrieb durch den Mikrocontroller 5 mit Hilfe eines Steuersignals S geschlossenem Schalter K1 fließt ein Strom über die Dioden DS und den Widerstand RC. Dabei entsteht zwischen der Referenzspannung +VR und dem Substratanschluss S eine Flussspannung, die indirekt durch den A/D-Wandler 4 an seinem Eingang VA gemessen wird. Alternativ zu der beschriebenen indirekten Messung der Flussspannung wäre es selbstverständlich möglich, bei geeigneter Ausführung des Sensors 3 und Beschaltung des A/D-Wandlers 4 die Flussspannung direkt zu erfassen.

Die Flussspannung der Diode DS ist überwiegend von zwei Einflussfaktoren abhängig, nämlich der Temperatur und dem Zustand der Materialien des Sensors 3, der beispielsweise durch chemische Kontamination verändert werden kann. Bei einer Kalibrierung des Messumformers 1 wird die Flussspannung zur Bestimmung ihrer Temperaturabhängigkeit für verschiedene Temperaturen gemessen und nach Art einer Kennlinie mit der Temperatur als Kennlinienparameter in ein EEPROM des Mikrocontrollers 5 abgespeichert. Aufgrund des so erfassten Temperaturverhaltens kann der PN-Übergang, welcher durch die Dioden DS symbolisiert wird, die Funktion eines geeichten Temperatursensors übernehmen. Zur Diagnose des Temperatursensors TS wird die im Testbetrieb ermittelte temperaturabhängige Flussspannung der Dioden DS zur Bestimmung eines Vergleichswerts für die zeitnah dazu mit dem Temperatursensor TS im Normalbetrieb ermittelte Temperatur herangezogen. Bei Abweichungen zwischen Vergleichswert und der mit Hilfe des Temperatursensors TS bestimmten Temperatur wird ein Fehler festgestellt und mit Hilfe des Mikrocontrollers 5 eine Fehlermeldung auf dem Ausgang FB und damit über den Feldbus 2 ausgegeben, so dass geeignete Maßnahmen zur Behebung des Fehlers eingeleitet werden können. Die Abweichungen können sowohl durch eine Kontaminierung des Substrats des Sensors 3 als auch durch Fehler im Temperatursensor TS, beispielsweise durch einen Leitungsbruch, verursacht sein.

Im Normalbetrieb ist der Schalter K1 durch Ausgabe eines entsprechenden Steuersignals S geöffnet. Das Substrat des Sensors 3 ist über den Widerstand RP auf ein Potential gelegt, das höher ist als die Referenzspannung +VR, die am Anschlusspunkt V+ des Sensors 3 anliegt. Die mit den Dioden DS symbolisierten PN-Übergänge zwischen dem Substrat und den elektrischen Elementen, d. h. den Widerständen R1 ... R4, sind damit gesperrt. Es fließt also kein Strom vom Anschlusspunkt S in die mit den Widerständen R1 ... R4 gebildete Messbrücke und die elektronischen Elemente sind elektrisch durch die PN-Übergänge vom Substrat des Sensors 3 getrennt. Dadurch wird eine unverfälschte Messung des Drucks im Normalbetrieb ermöglicht.

In vorteilhafter Weise werden zur Überwachung weitgehend Mittel eingesetzt, die ohnehin in einer Ansteuer- und Auswerteeinrichtung eines Druckmessumformers vorhanden sind. Lediglich der Widerstand RC, der Schalter K1 und Programmabschnitte des Mikrocontrollers 5, die zur Durchführung eines Verfahrens zur Überwachung des Zustands des Sensors 3 geeignet sind, müssen ergänzt werden. Das neue Überwachungsverfahren, das eine Sammeldiagnose des Sensors 3 ermöglicht, die eine Aussage über die Korrektheit der gemessenen Sensortemperatur und über den Zustand der Sensormaterialien enthält, ist daher mit einem vergleichsweise geringen zusätzlichen Aufwand gegenüber herkömmlichen Messumformern verbunden.

## Patentansprüche

1. Messumformer zur Prozessinstrumentierung
mit einem Sensor (3) zur Erfassung einer physikalischen oder chemischen Größe und zur Erzeugung eines Messsignals (MS) und mit einer Ansteuer- und Auswerteeinheit (4, 5) zur Bestimmung und Ausgabe eines Messwerts der physikalischen oder chemischen Größe in Abhängigkeit des Messsignals, wobei der Sensor (3) zumindest ein elektrisches Element (R1 ... R4) aufweist, das in ein Substrat aus halbleitendem Material eingebettet und von diesem im Normalbetrieb elektrisch durch einen gesperrten PN-Übergang (DS) getrennt ist, und wobei Mittel (K1, RC, 4, 5) zur Überwachung des Zustands des Sensors (3) vorhanden sind, durch welche der PN-Übergang in einem Testbetrieb in Durchlassrichtung schaltbar ist und die dazu ausgebildet sind, eine elektrische Eigenschaft des PN-Übergangs zu bestimmen und zur Überwachung des Sensorzustands auszuwerten.

2. Messumformer nach Anspruch 1, **dadurch gekennzeichnet, dass** die elektrische Eigenschaft des PN-Übergangs (DS) temperaturabhängig ist,
dass ein Temperatursensor (TS) zur Erfassung der Substrattemperatur vorgesehen ist,
dass die Überwachungsmittel (K1, RC, 4, 5) dazu ausgebildet sind, anhand der elektrischen Eigenschaft einen ersten Wert der Temperatur zu bestimmen und mit einem zweiten Wert, der mit dem Temperatursensor (TS) ermittelt ist, zu vergleichen.

3. Messumformer nach Anspruch 1 oder 2, **dadurch gekennzeichnet,**
**dass** die elektrische Eigenschaft des PN-Übergangs (DS) dessen Flussspannung in Durchlassrichtung ist.

4. Messumformer nach einem der Ansprüche 1 bis 3, **dadurch gekennzeichnet,**
**dass** die Mittel (K1, RC, 4, 5) zur Zustandsüberwachung zumindest teilweise in der Ansteuer- und Auswerteeinheit (4, 5) angeordnet sind.

5. Verfahren zur Überwachung des Zustands eines Sensors zur Erfassung einer physikalischen oder chemischen Größe und zur Erzeugung eines Messsignals (MS) in einem Messumformer zur Prozessinstrumentierung, der eine Ansteuer- und Auswerteeinheit (4, 5) aufweist zur Bestimmung und Ausgabe eines Messwerts der physikalischen oder chemischen Größe in Abhängigkeit des Messsignals (MS), wobei der Sensor (3) zumindest ein elektrisches Element (R1 ... R4) aufweist, das in ein Substrat aus halbleitendem Material eingebettet und von diesem im Normalbetrieb elektrisch durch einen gesperrten PN-Übergang (DS) getrennt ist, wobei das Verfahren die Schritte umfasst:
in einem Testbetrieb Schalten des PN-Übergangs (DS) in Durchlassrichtung,
Bestimmen einer elektrischen Eigenschaft des PN-Übergangs (DS) und
Auswerten der elektrischen Eigenschaft zur Überwachung des Zustands des Sensors (3).

## Claims

1. Measuring transducer for process instrumentation comprising a sensor (3) for detecting a physical or chemical variable and for generating a measuring signal (MS) and comprising a control and evaluation unit (4, 5) for determining and outputting a measured value of the physical or chemical variable as a function of the measuring signal, wherein the sensor (3) comprises at least one electrical element (R1...R4), which is embedded into a substrate made of semi-conductive material and is electrically separated herefrom during normal operation by a blocked PN junction (DS), and wherein means (K1, RC, 4, 5) exist for monitoring the status of the sensor (3), by means of which the PN junction can be switched in a test operation in the conducting direction and which are embodied so as to determine an electrical property of the PN junction and to evaluate it for monitoring the sensor state.

2. Measuring transducer according to claim 1, **characterized in that** the electrical property of the PN junction (DS) is temperature-dependent,
that a temperature sensor (TS) is provided to detect the substrate temperature,
that the monitoring means (K1, RC, 4, 5) are embodied to determine a first value of the temperature on the basis of the electrical property and to compare the same with a second value, which is determined with the temperature sensor (TS).

3. Measuring transducer according to claim 1 or 2, **characterized in that**
the electrical property of the PN junction (DS) is its forward voltage in the conducting direction.

4. Measuring transducer according to one of claims 1 to 3,
**characterized in that** the means (K1, RC, 4, 5) for monitoring the condition are arranged at least partially in the control and evaluation unit (4, 5).

5. Method for monitoring the condition of a sensor for detecting a physical or chemical variable and for generating a measuring signal (MS) in a measuring transducer for process instrumentation, which has a control and evaluation unit (4, 5) for determining and outputting a measured value of the physical or chemical variable as a function of the measuring signal (MS), with the sensor (3) having at least one electrical element (R1... R4), which is embedded in a substrate made of semi-conductive material and is electrically separated from this during normal operation by a blocked PN junction (DS), with the method including the steps:
switching the PN junction (DS) in the forward direction during test operation,
determining an electrical property of the PN junction (DS) and
evaluating the electrical property for monitoring the condition of the sensor (3).

## Revendications

1. Transducteur de mesure pour l'instrumentation de procédé comportant un capteur ( 3 ), pour détecter une grandeur physique ou chimique et pour produire un signal ( MS ) de mesure, et une unité ( 4, 5 ) de commande et d'exploitation, pour déterminer et fournir une valeur de mesure de la grandeur physique ou chimique en fonction du signal de mesure, le capteur ( 3 ) comportant au moins un élément ( R1 ... R4 ) électrique, qui est noyé dans un substrat en matériau semiconducteur et dont il est séparé électriquement en fonctionnement normal par une transition PN ( DS ) bloquée, et des moyens ( K1, RC, 4, 5 ) pour surveiller l'état du capteur ( 3 ) étant vus, par lesquels la transition PN dans un fonctionnement de test peut être commutée dans un sens passant et qui sont réalisés de manière à déterminer et à exploiter une propriété électrique de la transition PN pour la surveillance de l'état du capteur.

2. Transducteur de mesure suivant la revendication 1, **caractérisé**
**en ce que** la propriété électrique de la transition PN ( DS ) est fonction de la température,
**en ce qu'**un capteur ( TS ) de température est prévu pour déterminer la température de substrat,
**en ce que** les moyens ( K1, RC, 4, 5 ) de surveillance sont réalisés de sorte que, en fonction de la propriété électrique, ils déterminent une première valeur de la température et la comparent à une deuxième valeur qui est déterminée à l'aide du capteur ( TS ) de température.

3. Transducteur de mesure suivant la revendication 1 ou 2, **caractérisé**
**en ce que** la propriété électrique de la transition PN ( DS ) est sa tension de flux dans le sens passant.

4. Transducteur de mesure suivant l'une des revendications 1 à 3, **caractérisé**
**en ce que** les moyens ( K1, RC, 4, 5 ) de surveillance d'état sont au moins en partie disposés dans l'unité ( 4, 5 ) de commande et d'exploitation.

5. Procédé pour surveiller l'état d'un capteur pour déterminer une grandeur physique ou chimique et pour produire un signal ( MS ) de mesure dans un transducteur de mesure pour l'instrumentation de procédé, qui comporte une unité ( 4, 5 ) de commande et d'exploitation pour déterminer et fournir en sortie une valeur de mesure de la grandeur physique ou chimique en fonction du signal ( MS ) de mesure, le capteur ( 3 ) comportant au moins un élément ( R1 ... R4 ) électrique, qui est noyé dans un substrat en matériau semiconducteur et qui est séparé de ce dernier électriquement en fonctionnement normal par une transition PN ( DS ) bloquée, le procédé comportant les étapes suivantes :
dans un fonctionnement de test, on fait commuter la transition PN ( DS ) dans le sens passant
on détermine une propriété électrique de la transition PN ( DS ) et
on exploite la propriété électrique pour surveiller l'état du capteur ( 3 ).
